(19) Europäisches Patentamt
European Patent Office
Office européen des brevets

(11) **EP 2 164 165 A1**

(12) **EUROPEAN PATENT APPLICATION**

(43) Date of publication:
**17.03.2010  Bulletin 2010/11**

(51) Int Cl.:
*H02P 6/10* [(2006.01)]          *H02P 21/05* [(2006.01)]
*H02P 21/10* [(2006.01)]          *H02P 21/13* [(2006.01)]

(21) Application number: **08164429.6**

(22) Date of filing: **16.09.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **ABB Research Ltd.
8050 Zürich (CH)**

(72) Inventors:
- **Zelaha de la Parra, Hector
  722 46, Västerås (SE)**
- **Mühlethaler, Jonas
  8953, Dietikon (CH)**

(74) Representative: **Kock, Ina
ABB AB
Intellectual Property
Ingenjör Bååths Gata 11
721 83 Västerås (SE)**

(54) **Method and apparatus for reducing torque ripple in permanent magnet synchronous machines**

(57)     It is presented a method for reducing torque ripple in a permanent magnet synchronous machine. The method comprises the steps of: measuring at least one value representing the operation of the magnet synchronous machine; estimating a back electromotive force using the measured value; and based on the estimated back electromotive force, estimating a stator current used in a feedback loop for estimating the back electromotive force. A corresponding apparatus and direct torque controller are also presented.

Fig 2

**Description**

**FIELD OF INVENTION**

The present invention relates to improving the function of permanent magnet synchronous machines (PMSM). More specifically, the present invention reduces torque ripple in PMSMs.

**BACKGROUND**

Brushless Permanent Magnet Synchronous Motors (PMSM) are often used in demanding applications like servomotor applications. PMSMs have no commutator, which reduces maintenance requirements. Another advantage is the absence of rotor windings that eliminates copper losses in the rotor, making the PMSM highly efficient.

A PMSM in its ideal form has a sinusoidal distribution of magnet flux density in the air gap, sinusoidal current waveforms and a sinusoidal distribution of stator conductors. When exciting with a sinusoidal current, a constant torque that is linearly proportional to the current is achieved. Real PMSMs differ from these constraints, which can be a big drawback in demanding applications. Any deviation from the sinusoidal flux, sinusoidal current or sinusoidal winding distribution results in unwanted pulsation of the torque, i.e. in torque ripple.

Torque ripple is a term that includes every unwanted torque pulsation. Torque ripple originates for various reasons, not only because of the PMSM itself, but also because of the used inverter and the used control algorithm. The torque ripple mainly has three sources:

1. Non Ideal PMSM torque ripple

2. Control Algorithm torque ripple

3. Inverter torque ripple

Torque ripple is a significant problem in demanding high accuracy applications. The problem can be solved from the machine side or from the control side.

It is known in the prior art to optimise machines with respect of reducing PMSM torque ripple. However, machine optimisation results in drawbacks like high copper losses and/or increased manufacturing costs.

Consequently, if possible, it is desirable to reduce PMSM torque ripple using the controller.

It has been found that the major component of the torque ripple is due to what is called mutual torque ripple. The mutual torque ripple is the torque ripple due to a non sinusoidal rotor flux linkage distribution.

Mutual torque ripple occurs because of an incorrect torque estimation in a motor model used in DTC (Direct Torque Control). Consider the following DTC Motor Model equations according to the prior art:

$$\Psi_s = \int (\mathbf{v}_s - R_s \mathbf{i}_s) \mathrm{d}t \qquad (1)$$

$$T = \frac{3}{2} p \left( \Psi_{s\alpha} i_{s\beta} - \Psi_{s\beta} i_{s\alpha} \right) \qquad (2)$$

In equation (1), $\psi_a$ represents the stator flux. $v_s$ represents the stator voltage, $R_s$ represents the stator resistance, $i_s$ represents the stator current and t represents time.

In equation (2), T represents torque and p represents pole pairs of the winding of the PMSM. $\Psi_{s\alpha}$ represents the stator flux on the $\alpha$ axis, in an $\alpha\beta$ coordinate system. The $\alpha\beta$ coordinate system is a complex coordinate system which is stationary in relation to the stator. $\Psi_{s\beta}$ represents the stator flux on the $\beta$ axis of the $\alpha\beta$ coordinate system. Similarly, $i_{s\alpha}$ represents the stator current on the $\alpha$ axis and $i_{s\beta}$ represents the stator current on the $\beta$ axis.

The flux equation (1) is always true, regardless of non sinusoidal flux linkage distribution. However, the torque equation (2) is a simplification of the following equation:

$$T = \frac{3}{2} p \left( \frac{\mathrm{d}\Psi_{r\alpha}}{\mathrm{d}\Omega_e} i_{s\alpha} + \frac{\mathrm{d}\Psi_{r\beta}}{\mathrm{d}\Omega_e} i_{s\beta} \right) \tag{3}$$

In (3), $\psi_{r\alpha}$ represents rotor flux on the $\alpha$ axis and $\psi_{r\beta}$ represents the rotor flux on the $\beta$ axis. $\Omega_e$ represents the electrical angle. The equation (3) can further be transformed to:

$$T = \frac{3}{2} \frac{1}{\omega_m} \left( e_\alpha i_{s\alpha} + e_\beta i_{s\beta} \right) \tag{4}$$

In equation (4), $e_\alpha$ represents the back electromotive force (back-EMF) on the $\alpha$ axis and $e_\beta$ represents the back-EMF on the $\beta$ axis, as used for the stator. $\omega_m$ represents the angular velocity of the motor.

Therefore, an improvement in the torque estimation would solve the problem of mutual torque ripple. The mutual torque ripple is reflected in the back-EMF. The back EMF is a voltage induced by the rotor. Knowing the instantaneous back-EMF value would lead to more accurate torque estimation. Regardless of the control algorithm used (FOC, Field Oriented Control, or DTC), this would greatly alleviate the problem of mutual torque ripple.

In the prior art, the back-EMF is often extracted in an ID run in advance to compensate the mutual torque ripple. The problem here is that a back-EMF extraction in advance is not always possible and even if it is possible, the rotor flux linkage ripple can alter over time, temperature, etc.

## SUMMARY OF THE INVENTION

An object of the present invention is thus to provide an online estimation of the back-EMF, alleviating the stated problems of the prior art.

According to a first aspect of the invention, it is presented a method for reducing torque ripple in a permanent magnet synchronous machine. The method comprises the steps of: measuring at least one value representing the operation of the magnet synchronous machine; estimating a back electromotive force using the measured value; and based on the estimated back electromotive force, estimating a stator current used in a feedback loop for estimating the back electromotive force.

By performing an online estimation of the back-EMF, a more accurate torque estimation is possible. Using this in a control system, results in a significantly reduced torque ripple.

The step of measuring the at least one value may involve measuring a stator current of the permanent magnet synchronous machine.

The step of estimating the back electromotive force may further includes the steps of: obtaining a value representing a stator voltage of the permanent magnet synchronous machine; and estimating the back electromotive force using the value representing the stator voltage.

The step of estimating the back electromotive force may further include: calculating a control error as a difference between the estimated stator current and the measured stator current.

The method may be repeated during operation of the permanent magnet synchronous machine.

The step of obtaining a value representing a stator voltage may include using a switching table.

The step of obtaining a value representing a stator voltage may include measuring the stator voltage.

The estimating the back electromotive force may involve using a PID regulator to obtain an estimated stator current which follows the measured stator current, the estimated stator current being obtained using the value representing the stator voltage and the estimated back electromotive force.

A second aspect of the invention is an apparatus for reducing torque ripple comprising: means for measuring at least one value representing the operation of the magnet synchronous machine; means for estimating a back electromotive force using the measured value; and means for, based on the estimated back electromotive force, estimating a stator current used in a feedback loop for estimating the back electromotive force.

A third aspect is a direct torque controller comprising an apparatus according to the second aspect.

It is to be noted that any feature of the first, second and third aspects may, where appropriate, be applied to any other aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

**BRIEF DESCRIPTION OF DRAWINGS**

The invention is now described, by way of example, with reference to the accompanying drawings, in which:

Fig 1 is a schematic block diagram of a direct torque control system (DTC) according to an embodiment of the present invention; and
Fig 2 is a schematic block diagram showing a control system according to the embodiment of Fig 1.

**DETAILED DESCRIPTION OF PREFERRED EMBODIMENTS**

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

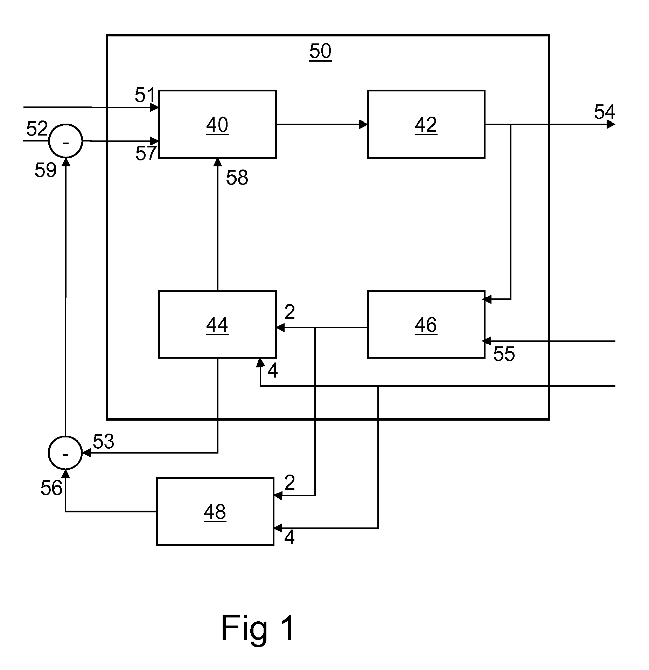

Fig 1 is a schematic block diagram of a direct torque control system (DTC) 50 according to an embodiment of the present invention. The DTC 50 has inputs for a reference torque 57 and a reference flux linkage 51. The reference torque 57 can e.g. come from a cascaded speed controller loop, where the flux linkage reference e.g. can be constant. The DTC block 50 changes a switching pattern $S_{abc}$ 54 in a way to keep the torque and flux linkage within a defined hysteresis band. The DTC comprises an estimation block 44, a torque and flux linkage hysteresis control block 40 and a switching table 42. The combiner 46 combines the switching table 42 output with a DC link voltage 55 to produce a voltage vector 2. The estimation block 44 estimates the actual torque and flux linkage 58 from the current vector 4 and the voltage vector 2, compares this value with the reference and chooses a corresponding voltage vector 58 to correct the error in torque and flux linkage. The actual torque and flux linkage are controlled by comparing the torque respectively the flux linkage with two thresholds of a hysteresis band. For instance, if the torque passes over this threshold, a corresponding voltage vector is chosen to reduce the torque by reducing the angle.

A torque estimator 48 according to the present embodiment is installed as an additional item to the DTC 50. It uses the current vector 4 and the voltage vector 2 as inputs, and outputs an estimated torque 56. The estimated torque is compared to a torque estimate 53 from the estimation block 44 of the DTC 50, resulting in a delta torque 59. The delta torque is combined with a reference torque 52 to obtain a corrected reference torque 57, which is fed to the torque and flux linkage hysteresis control block 40.

It is to be noted that the functionality of the torque estimator 48 can alternatively be contained in the estimator 44 of the DTC 50 instead of being installed outside the DTC. Furthermore, it is to be noted that the torque estimator 48 can also be connected to a Field Oriented Control (FOC) system instead of the DTC system as shown above. The same advantages with reduced torque ripple are realised when the torque estimator is used with a FOC. system.

In order to show the use of better back-EMF estimation, consider the following electrical machine equation:

$$\mathbf{v}_s = \mathbf{i}_s R_s + L^D \frac{d\mathbf{i}_s}{dt} + \frac{d\mathbf{\Psi}_r}{dt} \qquad (5)$$

In equation (5), $\psi_r$ represents the rotor flux and $L^D$ represents the inductance on a D-axis in a dq coordinate system. The dq coordinate system is a complex coordinate system which is stationary in relation to the rotor.

From equation (5), the back-EMF could theoretically directly be calculated, just by solving the equation:

$$\frac{d\mathbf{\Psi}_r}{dt} = \mathbf{v}_s - \mathbf{i}_s R_s - L^D \frac{d\mathbf{i}_s}{dt} \qquad (6)$$

But because the derivation with respect to time is very noise sensitive, this approach is problematic and the derivation should somehow be avoided.

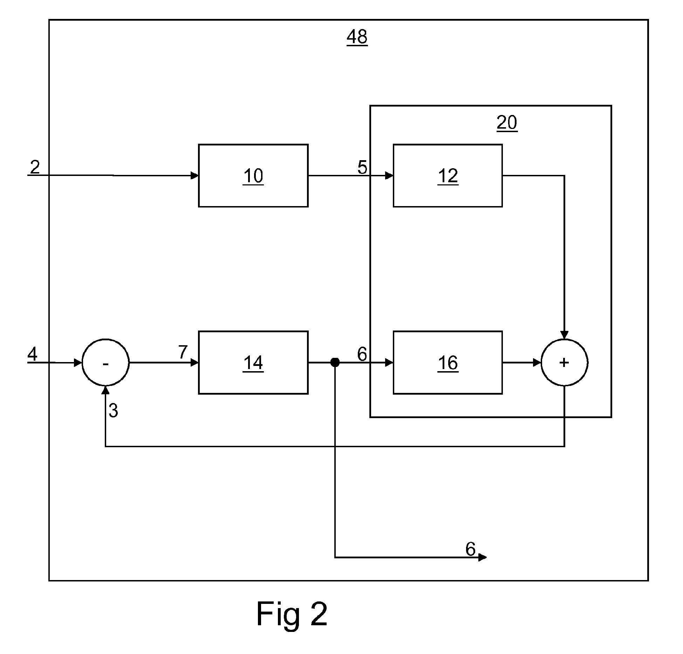

Consequently, new and inventive estimation is achieved by the approach illustrated in Fig 2.

The inputs of an estimator system 20 are the back-EMF 6 and the stator voltage $v_s$ 5. The stator voltage is known by means of measuring or using knowledge of a switching pattern of an IGBT/MOSFET. The output of the system 20 is an estimation of the current is 3. With a closed control loop this estimated current value 3 is compared to an actual measured current 4. A controller 14, such as a PID-Controller, adjusts the back-EMF 6 until the control error 7 is zero, which then indicates that the back-EMF 6 is correct. The back-EMF 6 can thus be extracted from the output of the controller 14.

The transfer function H(z) which is the function of the estimator system 20, can be expressed using the following two equations.

$$i_{\alpha,k+1} = (1 - \frac{T_s}{L^D} R_s) \cdot i_{\alpha,k} + \frac{T_s}{L^D} \cdot v_{s\alpha,k} - \frac{T_s}{L^D} \cdot v_{EMF\alpha,k} \tag{7}$$

$$i_{\beta,k+1} = (1 - \frac{T_s}{L^D} R_s) \cdot i_{\beta,k} + \frac{T_s}{L^D} \cdot v_{s\beta,k} - \frac{T_s}{L^D} \cdot v_{EMF\beta,k} \tag{8}$$

In the equations (7) and (8), k represents a discrete time, such as the sample time. Hence, $i_{\alpha,k+1}$ represents the current on the $\alpha$ axis at time k+1 and $i_{\beta,k+1}$ represents the current on the $\beta$ axis at time k+1. Analogously, $i_{\alpha,k}$ represents the current on the $\alpha$ axis at time k and $i\beta_{,k}$ represents the current on the $\beta$ axis at time k. $V_{s\alpha,k}$ represents the stator voltage on the $\alpha$ axis at time k and $V_{s\beta,k}$ represents the stator voltage on the $\beta$ axis at time k. Similarly, $V_{EMF\alpha,k}$ represents the electromotive force on the $\alpha$ axis at time k and $V_{EMF\beta,k}$ represents the electromotive force on the $\beta$ axis at time k. $T_s$ represents the sample time.

In order to understand the system 20 better, it can be regarded as having two transfer functions in boxes 12 and 16. Firstly, in box 12, H1 = $i_{est}/v_{filtered}$ and in box 16, H2 = $i_{est}/V_{EMF}$. $V_{filtered}$ is the output from filter 10.

The back-EMF input 6 to the transfer function in the box 16 is delayed from the original current input 4 due to the addition 20 and/or the controller 14. Hence, the input to the upper box 12 needs to be time shifted accordingly. A filter 10 performs this function, time shifting the stator voltage sample 2. For example, if the delay due to the addition and/or controller is one clock cycle, then the filter 10 delays the stator voltage sample 2 one clock cycle. In this way, the transfer functions in boxes 12 and 16 work on synchronous data.

Finally, the torque estimation, in the DTC Motor Model as used by the DTC 50, is replaced with the more general torque equation

$$T = \frac{3}{2} \frac{1}{\omega_m} \left( e_\alpha i_{s\alpha} + e_\beta i_{s\beta} \right) \tag{9}$$

Consequently, the better estimated back-EMF is used in conjunction with the DTC 50 to achieve a reduced torque ripple.

The method described above is repeated during the operation of the PMSM.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method for reducing torque ripple in a permanent magnet synchronous machine, said method comprising the steps of:

measuring at least one value representing the operation of the permanent magnet synchronous machine;

estimating a back electromotive force using said measured value; and
based on said estimated back electromotive force, estimating a stator current used in a feedback loop for estimating said back electromotive force.

2. The method according to claim 1, wherein said step of measuring said at least one value involves measuring a stator current of said permanent magnet synchronous machine.

3. The method according to claim 1 or 2, wherein said step of estimating said back electromotive force further includes the steps of:

   obtaining a value representing a stator voltage of said permanent magnet synchronous machine; and
   estimating said back electromotive force using said value representing said stator voltage.

4. The method according to claim 2 or 3, wherein said step of estimating said back electromotive force further includes: calculating a control error as a difference between said estimated stator current and said measured stator current.

5. The method according to any one of the previous claims, wherein said method is repeated during operation of the permanent magnet synchronous machine.

6. The method according to any one of claims 3 to 5, wherein said step of obtaining a value representing a stator voltage includes using a switching table (42).

7. The method according to any one of claims 3 to 5, wherein said step of obtaining a value representing a stator voltage includes measuring said stator voltage.

8. The method according to any one of claim 2 to 7, wherein said estimating said back electromotive force involves using a PID regulator to obtain an estimated stator current which follows said measured stator current, said estimated stator current being obtained using said value representing said stator voltage and said estimated back electromotive force.

9. An apparatus for reducing torque ripple comprising:

   means for measuring at least one value representing the operation of the permanent magnet synchronous machine;
   means for estimating a back electromotive force using said measured value; and
   means for, based on said estimated back electromotive force, estimating a stator current used in a feedback loop for estimating said back electromotive force.

10. A direct torque controller comprising an apparatus according to claim 9.

Fig 1

Fig 2

Europäisches
Patentamt

European
Patent Office

Office européen
des brevets

# EUROPEAN SEARCH REPORT

Application Number

EP 08 16 4429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARKADEH G R A ET AL: "Position sensorless direct torque control of BLDC motor by using modifier" OPTIMIZATION OF ELECTRICAL AND ELECTRONIC EQUIPMENT, 2008. OPTIM 2008. 11TH INTERNATIONAL CONFERENCE ON, IEEE, PISCATAWAY, NJ, USA, 22 May 2008 (2008-05-22), pages 93-99, XP031341192 ISBN: 978-1-4244-1544-1 * pages 93,95,96; figure 2 * ----- | 1-10 | INV. H02P6/10 H02P21/05 H02P21/10 H02P21/13 |
| X | KIM T S ET AL: "Unknown Input Observer for a Novel Sensorless Drive of Brushless DC Motors" APPLIED POWER ELECTRONICS CONFERENCE AND EXPOSITION, 2006. APEC '06. TWENTY-FIRST ANNUAL IEEE MARCH 19, 2006, PISCATAWAY, NJ, USA,IEEE, 19 March 2006 (2006-03-19), pages 679-684, XP010910018 ISBN: 978-0-7803-9547-3 * pages 679-683; figures 3,6 * ----- | 1-10 | |
| X | EP 0 942 521 A (SUNDSTRAND CORP [US] HAMILTON SUNDSTRAND CORP [US]) 15 September 1999 (1999-09-15) * paragraphs [0011], [0098] - [0101]; figure 18 * ----- -/-- | 1-10 | TECHNICAL FIELDS SEARCHED (IPC) H02P |

The present search report has been drawn up for all claims

| Place of search | Date of completion of the search | Examiner |
|---|---|---|
| The Hague | 9 April 2009 | Gusia, Sorin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 08 16 4429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CACCIATO M ET AL: "Comparison of low-cost-implementation sensorless schemes in vector controlled adjustable speed drives" POWER ELECTRONICS, ELECTRICAL DRIVES, AUTOMATION AND MOTION, 2008. SPEEDAM 2008. INTERNATIONAL SYMPOSIUM ON, IEEE, PISCATAWAY, NJ, USA, 11 June 2008 (2008-06-11), pages 1082-1087, XP031293228 ISBN: 978-1-4244-1663-9 * pages 1083-108, column 4; figure 2 * ----- | 1-10 | |
| X | WO 2005/067552 A (INT RECTIFIER CORP [US]; QUIRION JEAN [CA]) 28 July 2005 (2005-07-28) * paragraphs [0029], [0030]; figure 3 * ----- | 1-10 | |
| X | US 2004/070362 A1 (PATEL NITINKUMAR R [US] ET AL) 15 April 2004 (2004-04-15) * paragraph [0023]; figure 4 * ----- | 1-10 | |
| X | SHIMADA A ET AL: "Current Compensation Signal in Suppression Control for frame vibration of PMSM by Sensorless Control" POWER CONVERSION CONFERENCE - NAGOYA, 2007. PCC '07, IEEE, PI, 1 April 2007 (2007-04-01), pages 874-878, XP031178569 ISBN: 978-1-4244-0843-6 * pages 874-875; figure 4 * ----- | 1-10 | |

TECHNICAL FIELDS
SEARCHED (IPC)

-/--

The present search report has been drawn up for all claims

| Place of search | Date of completion of the search | Examiner |
|---|---|---|
| The Hague | 9 April 2009 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 08 16 4429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU Z ET AL: "An improved stator flux estimation for a variable structure direct torque controlled IPM synchronous motor drive using a sliding observer" INDUSTRY APPLICATIONS CONFERENCE, 2005. FOURTIETH IAS ANNUAL MEETING. CONFERENCE RECORD OF THE 2005 HONG KONG, CHINA 2-6 OCT. 2005, PISCATAWAY, NJ, USA,IEEE, vol. 4, 2 October 2005 (2005-10-02), pages 2484-2490, XP010842757 ISBN: 978-0-7803-9208-3 * pages 2485,248, column 6; figure 2 * | 1-10 | |

TECHNICAL FIELDS
SEARCHED      (IPC)

The present search report has been drawn up for all claims

| Place of search | Date of completion of the search | Examiner |
|---|---|---|
| The Hague | 9 April 2009 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 16 4429

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2009

| Patent document cited in search report | | Publication date | Patent family member(s) | | Publication date |
|---|---|---|---|---|---|
| EP 0942521 | A | 15-09-1999 | NONE | | |
| WO 2005067552 | A | 28-07-2005 | CN | 1918780 A | 21-02-2007 |
| | | | EP | 1714378 A2 | 25-10-2006 |
| | | | JP | 2007518390 T | 05-07-2007 |
| | | | US | 2005151502 A1 | 14-07-2005 |
| US 2004070362 | A1 | 15-04-2004 | DE | 10344914 A1 | 06-05-2004 |
| | | | JP | 3802894 B2 | 26-07-2006 |
| | | | JP | 2004135494 A | 30-04-2004 |

EPO FORM P0459

For more details about this annex : see Official Journal of the European Patent Office, No. 12/82